# EUROPÄISCHE PATENTANMELDUNG

(11) **EP 4 507 253 A1**
(43) Veröffentlichungstag der Anmeldung: **12.02.2025**
(21) Anmeldenummer: 23190448.3
(22) Anmeldetag: 09.08.2023
(51) Int. Cl.: H04L 12/46, H04L 61/2592

(54) **VERFAHREN ZUR DATENÜBERTRAGUNG IN EINEM NETZWERKSYSTEM SOWIE NETZWERKSYSTEM**

(71) Anmelder: dSPACE GmbH, 33102 Paderborn (DE)
(72) Erfinder: SCHEDLER, Stephan, 33102 Paderborn (DE); Kassner, Hendrik, 33102 Paderborn (DE)

(57) **Zusammenfassung**

Die Erfindung betrifft ein computerimplementiertes Verfahren zur Datenübertragung in einem Netzwerksystem (10) umfassend ein externes Netzwerk (12) und ein internes Netzwerk (14),
wobei das externe Netzwerk (12) zumindest ein erstes Netzwerkelement (18) und ein externes Netzwerkkommunikationselement (22) umfasst,
wobei das interne Netzwerk (14) zumindest ein zweites Netzwerkelement (20) und ein internes Netzwerkkommunikationselement (24) umfasst,
wobei das zweite Netzwerkelement (20) dazu ausgebildet ist, ausschließlich innerhalb des internen Netzwerks (14) zu kommunizieren,
wobei das Verfahren die folgenden Schritte umfasst:
- Codieren (S10, 34) der zu versendenden Daten;
- Übertragen der codierten Daten (S12) an das externe Netzwerkkommunikationselement (22);
- Übertragen der Daten (S14) an das interne Netzwerkkommunikationselement (24) über den IP-Kommunikationskanal und Decodieren (36) der Daten;
- Recodieren der Daten (S16) durch das interne Netzwerkkommunikationselement (24) in eine Anwendungsschicht;
- Übertragen der recodierten Daten (S18) an das zweite Netzwerkelement (20).

## Beschreibung

Die vorliegende Erfindung betrifft ein Verfahren zur Datenübertragung in einem Netzwerksystem. Des Weiteren betrifft die vorliegende Erfindung ein entsprechendes Netzwerksystem.

### Stand der Technik

Ein herkömmliches, Benutzer-Netzwerkknoten-Ziel-Netzwerkknoten-Szenario ohne Vorhandensein eines Clusters besteht normalerweise aus einem einzelnen Benutzer-Netzwerkknoten (Consumer-Client) wie einem Browser auf einem Desktop-PC, der einen Dienst wie eine HTML-Seite herunterzuladen anfordert und einem Ziel-Netzwerkknoten (Service-Provider) z. B. einem Webserver, der den angeforderten Dienst bereitstellt.

Der Consumer-Client und der Service-Provider hosten die entsprechenden Anwendungen und sind über Ethernet-Schnittstellen, z. B. "eth0", mit demselben Netzwerk verbunden. Um den Dienst nutzen zu können, muss der Consumer-Client die Dienstadresse kennen, die sich aus der IP-Adresse des Service-Providers, z. B. 192.168.0.1, und einem Dienstport, z. B. 80 für HTTP- oder 443 für HTTPS-Verbindungen, zusammensetzt.

Der Port wird benötigt, um die Dienstanwendung zu identifizieren, die auf dem Service-Provider betrieben wird. Um Antworten vom Service-Provider empfangen zu können, weist der Consumer-Client eine eigene Consumer-IP-Adresse auf und lauscht auf dem Consumer-Port.

Der Service-Provider verwendet hierzu normalerweise einen vordefinierten, statischen Port, da dieser Port jedem Consumer-Client bekannt sein muss, um eine Verbindung zu initiieren. Der Consumer-Port hingegen kann dynamisch erstellt werden, da er dem Service-Provider bei der ersten Verbindungsanfrage des Consumer-Clients bekannt gemacht werden kann.

Die Grundidee des Cloud-Computings ist es, Hunderte oder sogar Tausende Serviceanwendungen on-demand zu instanziieren, die jeweils gekapselt in einer Laufzeitumgebung, z. B. einem Container oder einer virtuellen Maschine, laufen. Ein gängiges Beispiel für eine solche Service-Anwendung ist eine Webserver-Anwendung, die auf einem vordefinierten Port auf HTTP- oder HTTPS-Anfragen lauscht.

Alternativ kann beispielsweise der Provider im Rahmen eines zweiten Consumer-Provider-Szenarios in einem anderen (Sub-)Netzwerk betrieben werden. Beide Knoten haben keine direkte Verbindung mehr, d. h. der Consumer-Client kann den Service-Provider nicht direkt erreichen und umgekehrt. Ein einfaches Beispiel für einen solchen Aufbau ist ein Cluster, bei dem der Service-Provider im Cluster instanziiert ist und der Consumer-Client außerhalb des Clusters betrieben wird.

Beide Knoten sind an unterschiedliche Netzwerke angeschlossen, die im Folgenden als interne und externe Netzwerke bezeichnet werden. Es gibt einen Zugangsknoten, der Zugang zu beiden Netzwerken hat, dem clusterinternen und dem clusterexternen Netzwerk. Anstatt eine Dienstanforderung an die Ziel-IP und den Service-Port zu senden, wird die anfängliche Verbindungsanforderung vom Consumer-Client an die IP und den Zugriffs-Port des Zugangsknotens gesendet und von dort wiederum an die IP und den Zugriffs-Port des Clusterknotens bzw. des Service-Providers gesendet.

Der Service-Provider ist derart konfiguriert, dass dieser den Dienst dem externen Netzwerk am Zugangsport zur Verfügung stellt, d. h. jede Anfrage vom Consumer-Client des externen Netzwerks an den Zugangsort wird an den Ziel-Netzwerkknoten im internen Netzwerk an dessen Serviceport weitergeleitet.

In den vorstehend genannten beiden Anwendungsszenarien wird die erste Verbindungsanfrage an einen statischen (bekannten) Port gerichtet. Im ersten Anwendungsszenario können in der nachfolgenden Kommunikation weitere dynamisch zugewiesene Ports verwendet werden. Dazu können neue Ports von Anwendungen auf dem Provider dynamisch zugewiesen werden. Der bestehende, initiale Kommunikationspfad kann genutzt werden, um dem Consumer-Client die Verfügbarkeit der neuen Ports und der zugehörigen Dienste zu signalisieren.

Im zweiten Anwendungsszenario, dem Bereitstellen der Services in einer Cloudumgebung, ist dies jedoch nicht möglich. Auch wenn neue Ports vom Service-Provider dynamisch zugewiesen werden können, sind diese vom externen Netzwerk aus nicht zugänglich. Das Freigeben von Ports, d. h. eine Port-Weiterleitung, erfordert normalerweise eine statische Konfiguration, so dass die Ports alle vorab bekannt sein müssen.

Dieses Problem ist für Dienstanwendungen, die für die Ausführung in einem Cluster konzipiert sind, nicht relevant. Wenn man jedoch eine bestehende Anwendung hat, die dynamische Ports verwendet, kann es zu beträchtlichen Kosten führen, wenn es erforderlich ist, die Anwendung von dem ersten Anwendungsszenario in das zweite Anwendungsszenario (Bereitstellen der Services in einer Cloudumgebung) zu portieren.

Gemäß weiteren bekannten Verfahren werden komplette Netzwerkpakte in einem Provider-seitigen Tunnel-Client gesnifft und über einen Tunnel übertragen. Die Pakete werden dann korrigiert, das heißt die Destinations-IP und die IP-Checksumme werden angepasst, und schließlich wieder als Roh-Datenpakete (Raw Frames) in das interne Netzwerk des Providers ausgegeben. Dabei werden lediglich der Ethernet- und der IP-Header des Frames analysiert. Die Payload der darüberliegenden Protokolle (TCP/UDP) werden aber nicht dekodiert.

Daraus resultiert jedoch ein Rechte- (Capability-) Problem. Beim Sniffen in einem solchen promiskuitiven Modus muss der lokale Ethernet-Stack eines solchen Tunnel-Server-Knotens deaktiviert werden, damit eine Tunnel-Server-Applikation den kompletten Ethernet-Traffic kontrollieren kann. Dies ist notwendig, weil sonst der nicht deaktivierte Ethernet Stack des Tunnel-Server-Knotens Pakete beantworten und zurückweisen würde, obwohl diese zum Tunnel-Client übertragen werden sollen.

Aktuell ist es nicht möglich, Anwendungen, die eine dynamische Portzuweisung benötigen, mit gängiger Container-Orchestrierungssoftware wie Kubernetes zu betreiben, wenn der dynamische Port von außerhalb des Clusters erreichbar sein muss.

Es ist daher Aufgabe der Erfindung, ein Verfahren zur Datenübertragung in einem Netzwerksystem sowie ein entsprechendes Netzwerksystem vorzusehen, welche es ermöglichen, Anwendungen, die eine dynamische Portzuweisung benötigen, in einer benutzerrechteeingeschränkten Clusterumgebung zu betreiben.

### Offenbarung der Erfindung

Die Aufgabe wird erfindungsgemäß durch ein Verfahren zur Datenübertragung in einem Netzwerksystem mit den Merkmalen des Patentanspruchs 1 sowie die Gegenstände der unabhängigen Ansprüche gelöst.

In einem ersten Aspekt betrifft die Erfindung ein computerimplementiertes Verfahren zur Datenübertragung in einem Netzwerksystem umfassend ein externes Netzwerk und ein internes Netzwerk. Das externe Netzwerk umfasst zumindest ein erstes Netzwerkelement und ein externes Netzwerkkommunikationselement. Das externe Netzwerkkommunikationselement ist zum Überwachen des externen Netzwerks ausgebildet. Das interne Netzwerk umfasst zumindest ein zweites Netzwerkelement und ein internes Netzwerkkommunikationselement. Das zweite Netzwerkelement ist dazu ausgebildet, ausschließlich innerhalb des internen Netzwerks zu kommunizieren. Das externe Netzwerkkommunikationselement und das interne Netzwerkkommunikationselement sind über einen IP-Kommunikationskanal miteinander kommunikativ verbunden.

Das Verfahren umfasst die folgenden Schritte:
- Codieren der zu versendenden Daten durch das erste Netzwerkelement;
- Übertragen der codierten Daten von dem ersten Netzwerkelement an das externe Netzwerkkommunikationselement;
- Decodieren (36) der Daten durch das externe Netzwerkkommunikationselement (22) und Übertragen der Daten (S14) von dem externen Netzwerkkommunikationselement (22) an das interne Netzwerkkommunikationselement (24) über den IP-Kommunikationskanal; oder
   Übertragen der Daten (S14) von dem externen Netzwerkkommunikationselement (22) an das interne Netzwerkkommunikationselement (24) über den IP-Kommunikationskanal und Decodieren (36) der Daten durch das interne Netzwerkkommunikationselement (24) ;
- Recodieren der Daten durch das interne Netzwerkkommunikationselement in eine Anwendungsschicht;
- Übertragen der recodierten Daten von dem internen Netzwerkkommunikationselement an das zweite Netzwerkelement; und
- Decodieren der Daten durch das zweite Netzwerkelement.

Das interne Netzwerk kann insbesondere ein Cluster Netz oder ein Intranet sein. Es ist dadurch vom externen Netzwerk abgegrenzt, dass die Elemente des internen Netzwerks nicht alle die Rechte haben, mit Geräten außerhalb des internen Netzwerks zu kommunizieren.

Spezielle Anforderungen oder Kommunikationsrestriktionen, die der Erfindung nicht entgegenstehen, können auch im externen Netzwerk bestehen, sind für das vorgeschlagene Verfahren jedoch nicht notwendig. Das externe Netzwerk kann daher ein beliebiges Netzwerk, beispielsweise das Internet oder ein lokales, insbesondere offenes Netzwerk sein.

Das erste Netzwerkelement kann beispielsweise ein Browser auf einem Desktop-PC sein, der einen Dienst anfordert, wie eine HTML-Seite herunterzuladen.

Das zweite Netzwerkelement kann hingegen das Gegenstück zum ersten Netzwerkelement sein, das einen Dienst anbietet, wie das Anbieten einer HTML-Seite zum Herunterladen.

Das erste und das zweite Netzwerkkommunikationselement sind dazu eingerichtet, miteinander über einen IP-Kommunikationskanal zu kommunizieren. Dabei ist der IP-Kommunikationskanal nicht zwangsweise ein IP-Tunnel.

Ein IP-Tunnel ist ein Netzwerkkommunikationskanal des Internetprotokolls zwischen zwei Netzwerken. Er wird verwendet, um ein anderes Netzwerkprotokoll durch Einkapselung seiner Pakete zu transportieren. Beim IP-Tunneling wird jedes IP-Paket, einschließlich der Adressierungsinformationen seines Quell- und Ziel-IP-Netzes, in ein anderes, für das Transitnetz natives Paketformat eingehüllt. Dabei werden vollständige Ethernet-Frames übertragen, was gemäß der vorliegenden Erfindung jedoch nicht nötig ist.

Das interne Netzwerkkommunikationselement muss gemäß der vorliegenden Erfindung keine erweiterten Rechte (Capabilities) besitzen. Damit wird weder eine klassische VPN-Verbindung noch eine Lösung realisiert, die etwa einen Provider-seitigen promiskuitiven Modus verwendet.

Die vorliegende Erfindung umgeht das Rechteproblem beim internen Netzwerkkommunikationselement, indem der Ethernet-Stack des internen Netzwerkkommunikationselements nicht deaktiviert wird. Stattdessen spiegelt das interne Netzwerkkommunikationselement das Verhalten des ersten Netzwerkelements im internen Netzwerk, indem es alle Serviceanfragen vom ersten Netzwerkelement an das zweite Netzwerkelement sendet. Die Roh-Datenpakete werden dazu vorzugsweise bis zur UDP/TCP-Schicht, d. h. zum Payload dieser Schicht decodiert. Wenn das externe oder das interne Netzwerkkommunikationselement
die UDP/TCP-Payload decodiert hat, kann es Anfragen mit dieser Payload selbst an das erste Netzwerkelement stellen.

Mit dem Begriff "UDP/TCP-Schicht" wird insbesondere Bezug genommen auf das ISO/OSI-Referenzmodell oder das TCP/IP-Referenzmodell.

Das ISO/OSI-Referenzmodell ist ein Referenzmodell für Netzwerkprotokolle als Schichtenarchitektur. Es definiert sieben aufeinanderfolgende Schichten (layers) mit jeweils eng begrenzten Aufgaben. In der gleichen Schicht mit klaren Schnittstellen definierte Netzwerkprotokolle sind einfach untereinander austauschbar, selbst wenn sie wie das Internet Protocol eine zentrale Funktion haben.

Das TCP/IP-Referenzmodell ist Grundlage der Internetprotokollfamilie. Für das Internet und die Internetprotokollfamilie beschreibt das Modell eine Gliederung in 4 aufeinander aufbauende Schichten. Dieses ist auf die Internet-Protokolle zugeschnitten, die den Datenaustausch über die Grenzen lokaler Netze hinaus ermöglichen. Darunter fallen insbesondere TCP und IP. Weder der Zugriff auf ein Übertragungsmedium noch die Datenübertragungstechnik werden in dem Modell definiert. Vielmehr sind die Internet-Protokolle dafür zuständig, Datenpakete über mehrere Punkt-zu-Punkt-Verbindungen (Hops) weiterzuvermitteln und auf dieser Basis Verbindungen zwischen Netzteilnehmern über mehrere Hops herzustellen.

Die Besonderheit der vorliegenden Erfindung besteht darin, dass zwischen dem ersten Netzwerkelement und dem zweiten Netzwerkelement kein direkter Kommunikationskanal besteht. Dennoch werden die Daten nicht aus dem ersten externen Netzwerk in das interne Netzwerk hinein getunnelt, wie es beispielsweise beim Verwenden einer VPN-Verbindung wäre. Vielmehr bildet das interne Netzwerkkommunikationselement einen Kommunikationsteilnehmer, der die Roh-Daten des ersten Netzwerkelements an das zweite Netzwerkelement versendet.

Das externe Netzwerkkommunikationselement fängt dabei jedwede Anfrage, die eigentlich an das zweite Netzwerkelement, insbesondere einen Service anbietenden Provider, ab. Die abgefangenen Daten werden von einem der Netzwerkkommunikationselemente decodiert und dann innerhalb des internen Netzwerks neu codiert bzw. recodiert.

Der Begriff "Recodieren" bezeichnet im Rahmen dieser Erfindung einen Vorgang des Codierens von Daten, die bereits codiert waren und anschließend decodiert wurden. Dabei müssen die Daten nicht auf dieselbe Weise bzw. in dieselbe Schicht codiert werden, wie beim vorangegangenen Codieren.

Im Unterschied zu einem ähnlichen Verfahren, bei dem das interne Netzwerkkommunikationselement den Datentransfer im externen Netzwerk überwacht, auch als "sniffing" bezeichnet, wird das Überwachen an das externe Netzwerkkommunikationselement ausgelagert. Das externe Netzwerkkommunikationselement unterliegt jedoch keinen rechtlichen Anforderungen, sodass das Rechte-Problem gemäß dem eingangs erwähnten Stand der Technik umgangen wird.

Dennoch ermöglicht das erfindungsgemäße Verfahren, eine Kommunikation zwischen dem ersten Netzwerkelement und dem zweiten Netzwerkelement, wobei das zweite Netzwerkelement dynamische Ports verwenden kann. Dadurch wird die Aufgabe der Erfindung gelöst.

In einer Ausführungsform umfasst das Codieren der Daten ein Einhüllen der Daten in zumindest eine Protokollhülle. Das Decodieren der Daten umfasst dementsprechend ein Entfernen ebendieser Protokollhülle. Ferner umfasst das Recodieren der Daten ein Einhüllen der Daten in zumindest eine Protokollhülle. Das Recodieren der Daten wird von dem internen Netzwerkkommunikationselement durchgeführt, da das interne Netzwerkkommunikationselement mit dem zweiten Netzwerkelement innerhalb des internen Netzwerks kommunizieren kann.

Eine Protokollhülle, in welche die Daten verpackt werden, ist beispielsweise ein UDP-Paket bzw. ein äußerer Bitstrom. Die Protokollhüllen, in die die Daten beim Codieren und beim Recodieren eingehüllt werden, müssen nicht dieselben Protokollhüllen sein oder dieselben Informationen tragen.

Die Ausführungsform ist von einem Man-in-the-Middle-Angriff (MITM) zu unterscheiden. Bei einem MITM werden üblicherweise die Roh-Daten ausgetauscht, um dem Empfänger falsche Daten zukommen zu lassen. Dies ist bei der vorliegenden Erfindung jedoch nicht der Fall, da die Roh-Daten unverändert bleiben und lediglich die Protokollhüllen ausgetauscht werden.

In einer Ausführungsform umfasst das Decodieren der Daten das Entfernen aller Protokollhüllen.

In vorteilhafter Weise werden die an das zweite Netzwerkelement übertragenen Daten auf ein Minimum reduziert. In der Übertragung verbleiben lediglich die Roh-Daten und die für die Übertragung vom internen Netzwerkkommunikationselement an das zweite Netzwerkelement notwendige(n) Protokollhülle(n).

In einer Ausführungsform ist der IP-Kommunikationskanal zwischen dem externen Netzwerkkommunikationselement und dem internen Netzwerkkommunikationselement ein statischer IP-Kommunikationskanal.

Ein statischer IP-Kommunikationskanal verwendet eine feste IP-Adresse, die dauerhaft einem bestimmten Netzwerkelement zugewiesen ist. Diese IP-Adresse wird manuell konfiguriert und bleibt stabil, solange keine Änderungen vorgenommen werden. Mit einem statischen IP-Kommunikationskanal können die beteiligten Geräte eine vordefinierte IP-Adresse verwenden, um miteinander zu kommunizieren. Diese Art der Konnektivität eignet sich in vorteilhafter Weise für Szenarien, in denen eine konstante, zuverlässige Verbindung erforderlich ist, beispielsweise bei Servern, Netzwerkgeräten oder bestimmten Diensten, die immer unter derselben IP-Adresse erreichbar sein müssen.

In einer Ausführungsform werden die Daten unabhängig davon decodiert, ob der in den vom ersten Netzwerkelement codierten Daten enthaltene Port von einem der Netzwerkkommunikationselemente bedient wird.

In vorteilhafter Weise kann das externe Netzwerkkommunikationselement die Übertragung der Daten ausgehend von dem ersten Netzwerkelement empfangen, auch wenn es den in der Codierung angegebenen Port nicht bedient. Dadurch kann sichergestellt werden, dass das externe Netzwerkelement alle Übertragungen aufgreift. Die in der Übertragung enthaltenen Daten können dann untersucht und gegebenenfalls an das zweite Netzwerkelement bzw. dessen Dienst weitergeleitet werden.

In einer weiteren Ausführungsform sendet das zweite Netzwerkelement eine Antwort an das interne Netzwerkkommunikationselement, wenn das zweite Netzwerkelement den Port nicht bedient, der in den vom internen Netzwerkkommunikationselement erhaltenen Daten enthalten ist. Das interne Netzwerkkommunikationselement leitet die Antwort an das externe Netzwerkkommunikationselement weiter und das externe Netzwerkkommunikationselement leitet die Antwort an das erste Netzwerkelement weiter.

Das zweite Netzwerkelement bedient den in der Übertragung vom internen Netzwerkelement angegebenen Port beispielsweise dann nicht, wenn der angebotene Service nicht verfügbar ist. Das kann beispielsweise dann der Fall sein, wenn der Service wegen einer Wartung offline ist oder technische Probleme im zweiten Netzwerkelement vorliegen.

Da das erste Netzwerkelement nicht direkt mit dem zweiten Netzwerkelement kommunizieren kann, ist eine Weiterleitung der Antwort des zweiten Netzwerkelements an das erste Netzwerkelement vorteilhaft, da dadurch das erste Netzwerkelement darüber informiert wird, dass der Port von dem zweiten Netzwerkelement nicht bedient wird.

In einer Ausführungsform sendet das externe Netzwerkkommunikationselement als Antwort auf die Übertragung der Daten von dem ersten Netzwerkelement ein protokollspezifisches Antwortpaket an das erste Netzwerkelement.

Je nach Art des verwendeten Protokolls kann eine Antwort auf die Übertragung der codierten Daten erforderlich sein. Das externe Netzwerkkommunikationselement bestätigt damit dem ersten Netzwerkelement, dass es die Übertragung erhalten hat. Die protokollspezifische Antwort kann insbesondere so ausgestaltet sein, dass das externe Netzwerkkommunikationselement das Verhalten des zweiten Netzwerkelements spiegelt. In diesem Fall würde das erste Netzwerkelement nicht merken, dass seine Übertragung nicht direkt vom zweiten Netzwerkelement empfangen und beantwortet wurde.

In einer Ausführungsform umfassen die Daten eine Verbindungsanfrage des ersten Netzwerkelements über einen definierten Port, wobei zwischen dem ersten Netzwerkelement und dem zweiten Netzwerkelement eine indirekte Verbindung aufgebaut wird. Das externe Netzwerkkommunikationselement und das interne Netzwerkkommunikationselement leiten in dieser Ausführungsform Daten zwischen dem ersten Netzwerkelement und dem zweiten Netzwerkelement weiter, wenn die Verbindungsanfrage erfolgreich war.

In vorteilhafter Weise kann durch eine solche Verbindungsanfrage eine stetige bzw. dauerhafte Verbindung zwischen dem ersten Netzwerkelement und dem zweiten Netzwerkelement aufgebaut werden.

In einer Ausführungsform erhält das erste Netzwerkelement und/oder das zweite Netzwerkelement eine Verlustnachricht über den Verlust der Verbindung, wenn die Verbindung geschlossen oder unterbrochen wird.

In vorteilhafterweise kann durch das Empfangen einer Verlustnachricht angezeigt werden, dass die Verbindung zwischen dem ersten Netzwerkelement und dem zweiten Netzwerkelement unterbrochen wurde. Dies kann beispielsweise vorteilhaft dazu genutzt werden, dass das erste Netzwerkelement erneut Daten an das externe Netzwerkkommunikationselement sendet, um eine Verbindung mit einem alternativen zweiten Netzwerkelement aufzubauen, das gegebenenfalls einen Ersatzservice zum zweiten Netzwerkelement anbietet.

In einer weiteren Ausführungsform umfasst die Verlustnachricht einen Grund für den Verlust der Verbindung.

Je nachdem, was der Grund für den Verlust der Verbindung ist, können vom ersten Netzwerkelement unterschiedliche Reaktionen vorgesehen sein. Beispielsweise kann das erste Netzwerkelement so ausgebildet sein, dass es in regelmäßigen Abständen einen neuen Versuch zur Verbindungsaufnahme unternimmt. In anderen Fällen kann es zielführender sein, ein alternatives zweites Netzwerkelement zu kontaktieren, um einen Ausweich-Service in Anspruch nehmen zu können.

In einer Ausführungsform sind das zweite Netzwerkelement und das interne Netzwerkkommunikationselement virtuelle Knoten auf einem gemeinsamen System.

In dieser Ausführungsform würden das zweite Netzwerkelement und das interne Netzwerkelement vorzugsweise nicht über einen Ethernet Controller kommunizieren, sondern über ein sogenanntes Loopback-Device, einen virtuellen Ethernet Controller für lokale Kommunikation.

In einer weiteren Ausführungsform sind das erste Netzwerkelement und das externe Netzwerkkommunikationselement virtuelle Knoten auf einem gemeinsamen System.

In dieser Ausführungsform würden das erste Netzwerkelement und das externe Netzwerkelement vorzugsweise nicht über einen Ethernet Controller kommunizieren, sondern über ein Loopback-Device.

In vorteilhafter Weise bewirkt die Implementierung der Elemente auf einem gemeinsamen System eine geringere Latenz in der Kommunikation zwischen ihnen. Die Daten müssen nicht über das Netzwerk übertragen werden, sondern können direkt zwischen den virtuellen Knoten ausgetauscht werden. Dies führt zu einer schnelleren und effizienteren Kommunikation.

Ferner kann eine virtuelle Implementierung eine höhere Sicherheit bieten. Da die Kommunikation über das Loopback-Device lokal erfolgt, können Sicherheitsrichtlinien und -maßnahmen leichter implementiert und kontrolliert werden. Die Daten bleiben innerhalb des Systems und sind weniger anfällig für externe Angriffe oder Abhörversuche über das Netzwerk. Es ist ferner festzuhalten, dass auch bei einer virtuellen Implementierung ein Netzwerk gebildet ist, in dem die virtuellen Elemente miteinander kommunizieren.

In einem weiteren Aspekt betrifft die Erfindung ein Netzwerksystem zur Datenübertragung, umfassend ein externes Netzwerk und ein internes Netzwerk. Das externe Netzwerk umfasst zumindest ein erstes Netzwerkelement und ein externes Netzwerkkommunikationselement. Das externe Netzwerkkommunikationselement ist zum Überwachen des externen Netzwerks ausgebildet.

Das interne Netzwerk umfasst zumindest ein zweites Netzwerkelement und ein internes Netzwerkkommunikationselement. Das zweite Netzwerkelement ist dazu ausgebildet, ausschließlich innerhalb des internen Netzwerks zu kommunizieren.

Das externe Netzwerkkommunikationselement und das interne Netzwerkkommunikationselement sind über einen IP-Kommunikationskanal miteinander kommunikativ verbunden. Das externe Netzwerkkommunikationselement ist ferner dazu ausgebildet, von dem ersten Netzwerkelement empfangene codierte Daten zu verarbeiten, wenn der in den codierten Daten genannte Port von dem externen Netzwerkkommunikationselement nicht bedient wird. Das System ist ferner dazu ausgebildet, ein Verfahren wie voranstehend beschrieben auszuführen.

Das hierin beschriebene Verfahren zur Datenübertragung in einem Netzwerksystem ist ebenso auf das erfindungsgemäße Netzwerksystem und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: schematisch den Ablauf des Verfahrens gemäß einer Ausführungsform;
- Fig. 2: schematisch den Aufbau und die Kommunikation in einem Netzwerksystem gemäß einer Ausführungsform;
- Fig. 3: eine weitere Ausführungsform eines Netzwerksystems; und
- Fig. 4: eine schematische Darstellung der Vorgänge des Codierens und des Decodierens.

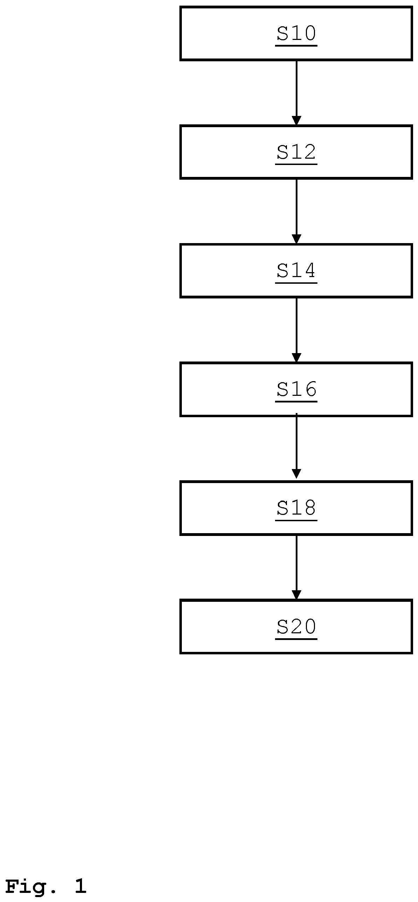

Figur 1 zeigt schematisch den Ablauf des Verfahrens gemäß einer Ausführungsform. Das Verfahren beginnt mit Schritt S10, in dem ein erstes Netzwerkelement, ein Consumer-Client Daten codiert. Die Daten sind für einen Service, einen angebotenen Dienst, bestimmt, der von einem zweiten Netzwerkelement, einem Service-Provider angeboten wird.

Der Consumer-Client befindet sich in einem beliebigen ersten Netzwerk und kann mit allen darin befindlichen Teilnehmern kommunizieren. Der Service-Provider hingegen befindet sich in einem zweiten Netzwerk, indem die Teilnehmer nur eingeschränkte Rechte zur Kommunikation besitzen. Insbesondere der Service-Provider ist von diesen Beschränkungen betroffen und darf nicht über das zweite Netzwerk hinaus kommunizieren.

Nach dem Codieren der Daten durch den Consumer-Client werden die Daten in Schritt S12 an ein externes Netzwerkkommunikationselement übertragen. Das externe Netzwerkkommunikationselement überwacht den Datenverkehr im ersten Netzwerk und decodiert die Daten des Consumer-Clients, auch dann, wenn es den in der Codierung angegebenen Port eigentlich nicht bedient.

Das externe Netzwerkkommunikationselement ist kommunikativ mit einem internen Netzwerkkommunikationselement verbunden, das sich innerhalb des zweiten, restriktiven Netzwerks befindet.

In Schritt S14 überträgt das externe Netzwerkkommunikationselement die Daten an das interne Kommunikationselement.

In einer alternativen Ausführungsform werden die Daten von dem externen Netzwerkkommunikationselement codiert, das heißt, so wie vom Consumer-Client empfangen, an das interne Netzwerkkommunikationselement weitergeleitet. In dieser Ausführungsform würde das interne Netzwerkkommunikationselement die Daten decodieren.

In Schritt S16 werden die Daten durch das interne Netzwerkkommunikationselement recodiert. Das bedeutet, dass das interne Netzwerkkommunikationselement die Daten in eine Protokollhülle einhüllt, die für eine Übertragung an den Service-Provider geeignet ist.

In Schritt S18 werden die recodierten Daten an den Service-Provider übertragen, der sie in Schritt S20 dann decodiert.

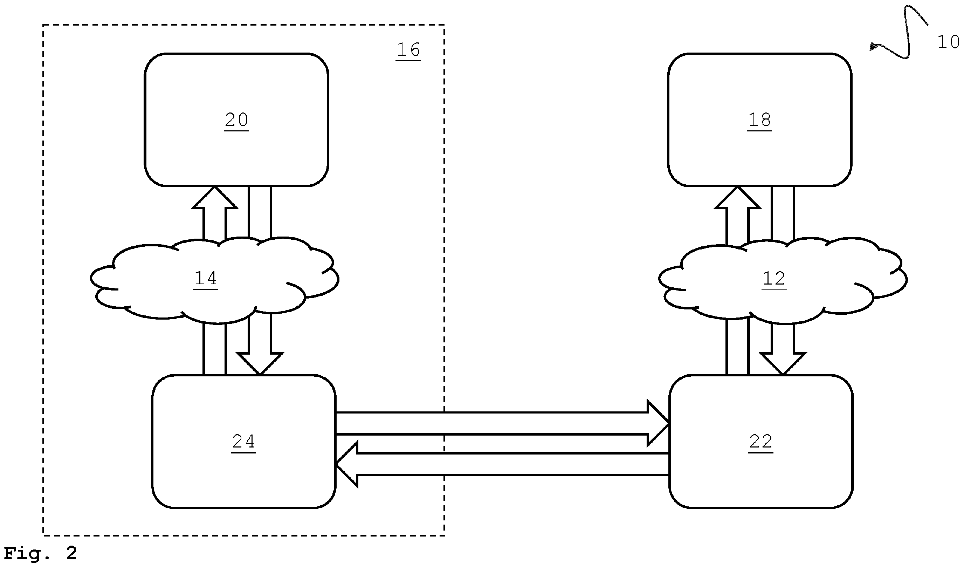

Figur 2 zeigt schematisch den Aufbau eines Netzwerksystems 10. Das Netzwerksystem 10 umfasst zwei voneinander getrennte Netzwerke 12 und 14. Das Netzwerk 12 kann beispielsweise ein offenes Netzwerk sein, in dem die Teilnehmer beschränkungsfrei miteinander kommunizieren können. Das Netzwerk 14 hingegen ist ein Netzwerk, in dem die Teilnehmer nur beschränkte Rechte haben. Nur ausgewählte Teilnehmer können mit Teilnehmern aus anderen Netzwerken kommunizieren, wobei sie auch dabei strengen Beschränkungen 16 der Kommunikationsrechte unterworfen sind. Dies kann insbesondere der Sicherheit der Teilnehmer des internen Netzwerks 14 dienen.

Das erfindungsgemäße Verfahren wird ausgeführt, sodass ein erstes Netzwerkelement 18 aus dem externen Netzwerk 12 mit einem zweiten Netzwerkelement 20 aus dem internen Netzwerk 14 kommunizieren kann, obwohl das zweite Netzwerk 20 Beschränkungen 16 der Kommunikation unterliegt.

Diese Kommunikation wird ermöglicht, indem sie über ein externes Netzwerkkommunikationselement 22 im externen Netzwerk 12 und ein internes Netzwerkkommunikationselement 24 im internen Netzwerk 14 geführt wird.

Das externe Netzwerkkommunikationselement 22 ist dazu ausgebildet, die im externen Netzwerk 12 übertragenen Daten zu überwachen. Dadurch kann das externe Netzwerkkommunikationselement 22 auch Daten empfangen und verarbeiten, die eigentlich an das zweite Netzwerkelement 20 andressiert ist. Dieser Prozess wird auch als "sniffing" bezeichnet.

Zwischen dem ersten Netzwerkelement 18 und dem externen Netzwerkkommunikationselement 22 kann ein vom externen Netzwerk 12 vorgegebenes Protokoll verwendet werden. Das im internen Netzwerk 14 verwendete Protokoll kann sich von dem Protokoll des externen Netzwerks 12 unterscheiden. Ferner kann das zweite Netzwerkelement 20 dynamische Ports verwenden. In Ausführungsformen kann das interne Netzwerkkommunikationselement 24 dazu ausgebildet sein, den Port für die Anwendung des zweiten Netzwerkelements 20 zu erfragen, bevor es die Daten recodiert und an das zweite Netzwerkelement 20 versendet.

Die Kommunikation zwischen dem externen Netzwerkkommunikationselement 22 und dem internen Netzwerkkommunikationselement 24 kann beliebig ausgestaltet sein. Das externe Netzwerkkommunikationselement 22 muss lediglich dazu ausgebildet sein, die vom ersten Netzwerkelement 18 empfangenen Daten an das interne Netzwerkkommunikationselement 24 übertragen zu können.

Die Daten können beispielsweise vom externen Netzwerkkommunikationselement 22 als Roh-Daten an das interne Netzwerkkommunikationselement 24 übertragen werden. Alternativ kann auch bei der Übertragung zwischen dem externen Netzwerkkommunikationselement 22 und dem internen Netzwerkkommunikationselement 24 eine eigene, protokollabhängige Codierung verwendet werden. In diesem Fall würde das Übertragen der Daten von dem externen Netzwerkkommunikationselement 22 an das interne Netzwerkkommunikationselement 24 ein Codieren der Daten durch das externe Netzwerkkommunikationselement 22 und ein Decodieren der Daten durch das interne Netzwerkkommunikationselement 24 umfassen. Dabei muss das beim Codieren und beim Decodieren verwendete Protokoll dem im IP-Kommunikationskanal verwendeten Protokoll genügen.

Wenn das zweite Netzwerkelement 20 die Daten empfangen und decodiert hat, kann es sie gemäß seiner Anwendung oder des von ihm angebotenen Services verarbeiten.

In Ausführungsformen kann die Anwendung oder der angebotene Service des zweiten Netzwerkelements 20 eine Antwort an das erste Netzwerkelement 18 erfordern. In diesem Fall gibt es zwei Möglichkeiten.

Gemäß der ersten Möglichkeit wird mit der ersten Übertragung von dem ersten Netzwerkelement 18 eine Anfrage zum Aufbau eines Kommunikationskanals versendet. Ist die Anfrage erfolgreich, wird ein Kommunikationskanal zwischen dem ersten Netzwerkelement 18 und dem zweiten Netzwerkelement 20 aufgebaut in der Art, dass das externe Netzwerkkommunikationselement 22 und das interne Netzwerkkommunikationselement 24 alle Daten zwischen dem ersten Netzwerkelement 18 und dem zweiten Netzwerkelement 20 weiterleiten.

Gemäß der zweiten Möglichkeit wird das vorgeschlagene Verfahren rückwärts angewendet. Das heißt, das zweite Netzwerkelement 20 codiert Daten, um diese an das erste Netzwerkelement 18 zu versenden. Das erste Netzwerkelement 18 ist jedoch kein Kommunikationsteilnehmer im internen Netzwerk 14, sodass es die Daten nicht direkt empfangen kann.

Das interne Netzwerkkommunikationselement 24 überwacht oder "snifft" den Datenverkehr im internen Netzwerk 14 und erkennt die Übertragung des zweiten Netzwerkelements 20. Unabhängig davon, ob es den in der Codierung enthaltenen Port bedient oder nicht, nimmt es die Daten an und reagiert mit einer entsprechenden Protokollantwort an das zweite Netzwerkelement 20.

Das interne Netzwerkkommunikationselement 24 übermittelt die Daten codiert oder uncodiert an das externe Netzwerkkommunikationselement 22. Das externe Netzwerkkommunikationselement 22 wiederum spiegelt das Verhalten des zweiten Netzwerkelements 20, indem es die Daten recodiert und an das erste Netzwerkelement 18 überträgt.

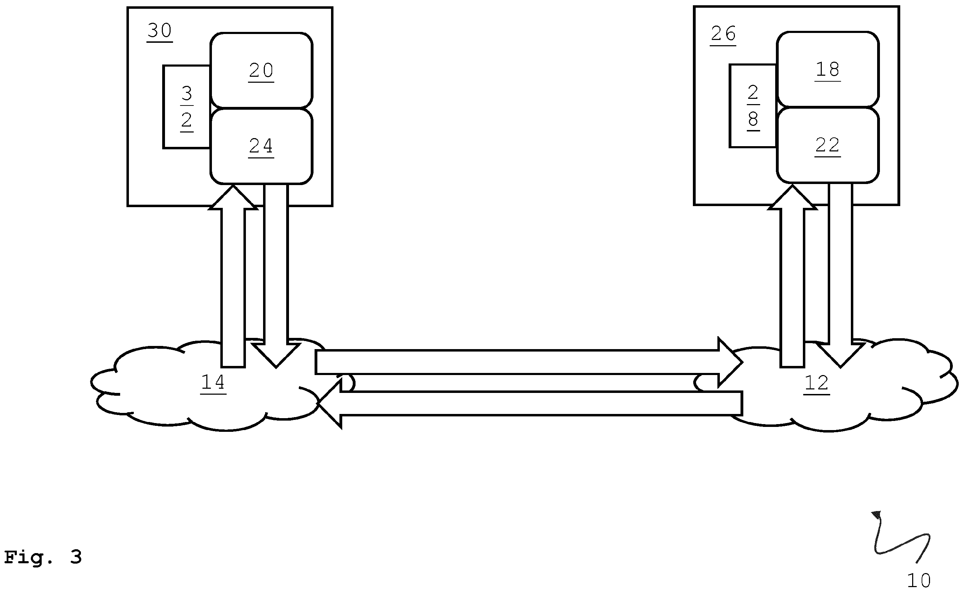

Figur 3 zeigt eine Ausführungsform, bei der das Netzwerksystem 10 zwei Netzwerke 12 und 14 umfasst. In dem externen Netzwerk 12 gibt es zumindest ein System 26, auf dem ein erstes Netzwerkelement 18 und ein externes Netzwerkkommunikationselement 22 als zwei virtuelle Subsysteme betrieben werden. Das erste Netzwerkelement 18 und das externe Netzwerkkommunikationselement 22 können über ein Loopback-Device 28 miteinander kommunizieren.

In dem internen Netzwerk 14 gibt es ein System 30, auf dem ein zweites Netzwerkelement 20, insbesondere als Service-Provider, und ein internes Netzwerkkommunikationselement 24 betrieben werden. Das zweite Netzwerkelement 20 und das interne Netzwerkkommunikationselement 24 können über ein Loopback-Device 32 des Systems 30 miteinander kommunizieren.

In dieser Ausführungsform sind das erste Netzwerkelement 18 und das zweite Netzwerkelement 20 dazu ausgebildet, ausschließlich über das jeweilige Loopback-Device 28, 32 zu kommunizieren. Das vorgeschlagene Verfahren kann mit dieser Ausführung unabhängig davon ausgeführt werden, wie die Netzwerkelemente 18, 20 mit den Netzwerkkommunikationselementen 22, 24 kommunizieren.

In weiteren Ausführungsformen können die Anzahl der ersten Netzwerkelemente 18 und der zweiten Netzwerkelemente 20 variieren. Ferner können beliebig viele Netzwerkelemente 18, 20 mit den

Netzwerkkommunikationselementen 22, 24 über Loopback-Devices 28, 32 kommunizieren. Insbesondere können in einer Ausführungsform nur das erste Netzwerkelement 18 und das externe Netzwerkkommunikationselement 22 über ein Loopback-Device 28 verfügen. Das zweite Netzwerkelement 20 und das interne Netzwerkkommunikationselement 24 wären in dieser Ausführungsform voneinander getrennte Systeme.

Umgekehrt können in einer Ausführungsform das zweite Netzwerkelement 20 und das interne Netzwerkkommunikationselement 24 zu einem System 30 mit einem Loopback-Device 32 in einem System 30 zusammengefasst sein. Das erste Netzwerkelement 18 und das externe Netzwerkkommunikationselement 22 wären in dieser Ausführungsform zwei voneinander getrennte Systeme.

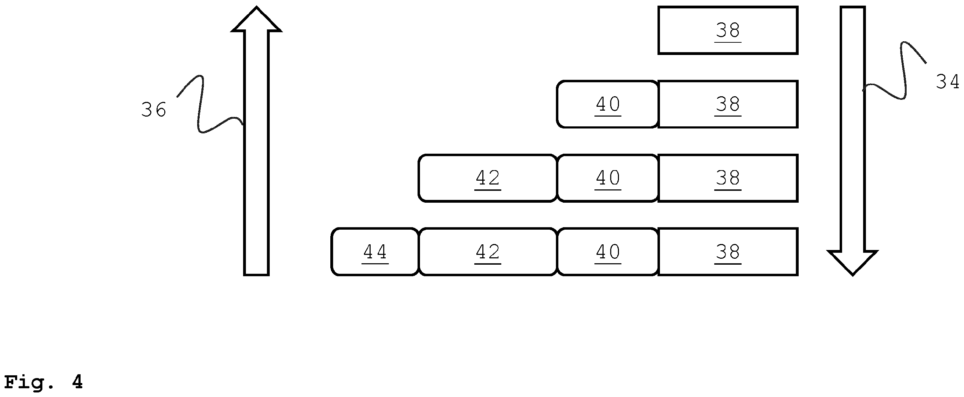

Figur 4 zeigt schematisch die Prozesse des Codierens 34 und des Decodierens 36 eines Datenpakets 38.

Beim Codieren 34 wird dem Datenpaket 38 ein Header hinzugefügt, der beschreibt, wie die darunterliegenden Datenstruktur zu verwenden ist. In der obersten Ebene befinden sich die Roh-Daten. In dieser Ebene hat das Datenpaket 38 keinen verfahrensrelevanten Header.

Wird das Datenpaket 38 eine Ebene tiefer codiert, erhält es einen Header 40 für diese Ebene. Diese Ebene kann beispielsweise eine Anwendungsebene sein, sodass Anwendungen das Datenpaket 38 mit der im Header 40 enthaltenen Information lesen und/oder verarbeiten können. Geeignete Protokolle für diese Ebene sind beispielsweise http, UDS, FTP, SMTP, POP, Telnet, DHCP, OPC UA, TLS oder SOCKS.

Das Datenpaket 38 kann weiter codiert und in eine tiefere Schicht eindringen. Beim Codieren 34 wird dann ein weiterer Header 42 hinzugefügt, der dem Header 40 aus der nächst höheren Schicht vorangestellt wird.

Diese Schicht kann beispielsweise für den Transport des Datenpakets 38 verwendet werden. Geeignete Protokolle sind beispielsweise TCP, UDP oder SCTP.

Eine weitere Schicht tiefer kann die Vermittlungsschicht sein, die beispielsweise eine Übertragung des Datenpakets 38 über ein Netzwerk, insbesondere das Internet, ermöglicht. Hierzu wird ein weiterer Header 44 dem Header 42 aus der darüberliegenden Schicht vorangestellt. Geeignete Protokolle für die Übertragung von Daten im Internet umfassen beispielsweise IP mit IPv4 oder IPv6 sowie ICMP.

Schließlich kann eine unterste Schicht erreicht werden (nicht dargestellt), die die Übertragung der Daten absichert und/oder auf Bit-Ebene regelt. Ein Header dieser Schicht würde dem Header 44 der Schicht darüber vorangestellt werden.

Die Header 40, 42 und 44 können unterschiedliche Längen aufweisen, die insbesondere von dem jeweils verwendeten Protokoll abhängen.

Beim Decodieren 36 werden die Header nach und nach entfernt. Das Dekodierten 36 umfasst daher in gewisser Weise eine Übersetzung des ankommenden Datenstroms in ein Datenpaket 38, das den Headern 44, 42 und 40 entsprechend gehandhabt werden kann.

### Bezugszeichenliste

- 10: Netzwerksystem
- 12: externes Netzwerk
- 14: internes Netzwerk
- 16: Beschränkung
- 18: erstes Netzwerkelement
- 20: zweites Netzwerkelement
- 22: externes Netzwerkkommunikationselement
- 24: internes Netzwerkkommunikationselement
- 26: System
- 28: Loopback-Device
- 30: System
- 32: Loopback-Device
- 34: Codieren
- 36: Decodieren
- 38: Datenpaket
- 40: Header
- 42: Header
- 44: Header
- S10-S20: Verfahrensschritte

## Patentansprüche

1. Computerimplementiertes Verfahren zur Datenübertragung in einem Netzwerksystem (10) umfassend ein externes Netzwerk (12) und ein internes Netzwerk (14),
wobei das externe Netzwerk (12) zumindest ein erstes Netzwerkelement (18) und ein externes Netzwerkkommunikationselement (22) umfasst,
wobei das externe Netzwerkkommunikationselement (22) zum Überwachen des externen Netzwerks (12) ausgebildet ist,
wobei das interne Netzwerk (14) zumindest ein zweites Netzwerkelement (20) und ein internes Netzwerkkommunikationselement (24) umfasst,
wobei das zweite Netzwerkelement (20) dazu ausgebildet ist, ausschließlich innerhalb des internen Netzwerks (14) zu kommunizieren,
wobei das externe Netzwerkkommunikationselement (22) und das interne Netzwerkkommunikationselement (24) über einen IP-Kommunikationskanal miteinander kommunikativ verbunden sind,
wobei das Verfahren die folgenden Schritte umfasst:
- Codieren (S10, 34) der zu versendenden Daten durch das erste Netzwerkelement (18);
- Übertragen der codierten Daten (S12) von dem ersten Netzwerkelement (18) an das externe Netzwerkkommunikationselement (22);
- Decodieren (36) der Daten durch das externe Netzwerkkommunikationselement (22) und Übertragen der Daten (S14) von dem externen Netzwerkkommunikationselement (22) an das interne Netzwerkkommunikationselement (24) über den IP-Kommunikationskanal; oder Übertragen der Daten (S14) von dem externen Netzwerkkommunikationselement (22) an das interne Netzwerkkommunikationselement (24) über den IP-Kommunikationskanal und Decodieren (36) der Daten durch das interne Netzwerkkommunikationselement (24);
- Recodieren der Daten (S16) durch das interne Netzwerkkommunikationselement (24) in eine Anwendungsschicht;
- Übertragen der recodierten Daten (S18) von dem internen Netzwerkkommunikationselement (24) an das zweite Netzwerkelement (20); und
- Decodieren (36) der Daten (S20) durch das zweite Netzwerkelement (20).

2. Computerimplementiertes Verfahren nach Anspruch 1,
wobei die zu versendenden Daten eine Nachricht umfassen,
wobei das Codieren (34) der Daten ein Einhüllen der Daten in zumindest eine Protokollhülle umfasst, wobei das Decodieren (36) der Daten ein Entfernen zumindest einer Protokollhülle umfasst,
wobei das Recodieren der Daten durch das interne Netzwerkkommunikationselement (24) ein Einhüllen der Daten in zumindest eine Protokollhülle umfasst.

3. Computerimplementiertes Verfahren nach Anspruch 2, wobei das Decodieren (36) der Daten das Entfernen aller Protokollhüllen umfasst.

4. Computerimplementiertes Verfahren nach einem der Ansprüche 2 oder 3, wobei die Adresse und/oder der Port des zweiten Netzwerkelements (20) dynamisch erzeugt wurden.

5. Computerimplementiertes Verfahren nach einem der vorangegangenen Ansprüche, wobei der IP-Kommunikationskanal zwischen dem externen Netzwerkkommunikationselement (22) und dem internen Netzwerkkommunikationselement (24) ein statischer IP-Kommunikationskanal ist.

6. Computerimplementiertes Verfahren nach einem der vorangegangenen Ansprüche, wobei die Daten unabhängig davon decodiert werden, ob der in den vom ersten Netzwerkelement (18) codierten Daten enthaltene Port von einem der Netzwerkkommunikationselemente (22, 24) bedient wird.

7. Computerimplementiertes Verfahren nach einem der vorangegangenen Ansprüche, wobei das zweite Netzwerkelement (20) eine Antwort an das interne Netzwerkkommunikationselement (24) sendet, wenn das zweite Netzwerkelement (20) den Port nicht bedient, der in den vom internen Netzwerkkommunikationselement (24) erhaltenen Daten enthalten ist,
wobei das interne Netzwerkkommunikationselement (24) die Antwort an das externe Netzwerkkommunikationselement (22) weiterleitet und das externe Netzwerkkommunikationselement (22) die Antwort an das erste Netzwerkelement (18) weiterleitet.

8. Computerimplementiertes Verfahren nach einem der vorangegangenen Ansprüche, wobei das externe Netzwerkkommunikationselement (22) als Antwort auf die Übertragung der Daten von dem ersten Netzwerkelement (18) ein protokollspezifisches Antwortpaket an das erste Netzwerkelement (18) sendet.

9. Computerimplementiertes Verfahren nach einem der vorangegangenen Ansprüche, wobei die Daten eine Verbindungsanfrage des ersten Netzwerkelements (18) über einen definierten Port umfassen,
wobei zwischen dem ersten Netzwerkelement (18) und dem zweiten Netzwerkelement (20) eine indirekte Verbindung aufgebaut wird,
wobei das externe Netzwerkkommunikationselement (22) und das interne Netzwerkkommunikationselement (24) Daten zwischen dem ersten Netzwerkelement (18) und dem zweiten Netzwerkelement (20) weiterleiten, wenn die Verbindungsanfrage erfolgreich war.

10. Computerimplementiertes Verfahren nach Anspruch 9, wobei das erste Netzwerkelement (18) und/oder das zweite Netzwerkelement (20) eine Verlustnachricht über den Verlust der Verbindung erhalten, wenn die Verbindung geschlossen oder unterbrochen wird.

11. Computerimplementiertes Verfahren nach Anspruch 10, wobei die Verlustnachricht einen Grund für den Verlust der Verbindung umfasst.

12. Computerimplementiertes Verfahren nach einem der vorangegangenen Ansprüche, wobei das zweite Netzwerkelement (20) und das interne Netzwerkkommunikationselement (24) virtuelle Knoten auf einem gemeinsamen System (30) sind.

13. Computerimplementiertes Verfahren nach Anspruch 12, wobei das zweite Netzwerkelement (20) und das interne Netzwerkkommunikationselement (24) über einen virtuellen Ethernet Controller lokal miteinander kommunizieren.

14. Computerimplementiertes Verfahren nach einem der vorangegangenen Ansprüche, wobei das erste Netzwerkelement (18) und das externe Netzwerkkommunikationselement (22) virtuelle Knoten auf einem gemeinsamen System (26) sind.

15. Netzwerksystem (10) zur Datenübertragung umfassend ein externes Netzwerk (12) und ein internes Netzwerk (14),
wobei das externe Netzwerk (12) zumindest ein erstes Netzwerkelement (18) und ein externes Netzwerkkommunikationselement (22) umfasst,
wobei das externe Netzwerkkommunikationselement (22) zum Überwachen des externen Netzwerks (12) ausgebildet ist,
wobei das interne Netzwerk (14) zumindest ein zweites Netzwerkelement (20) und ein internes Netzwerkkommunikationselement (24) umfasst,
wobei das zweite Netzwerkelement (20) dazu ausgebildet ist, ausschließlich innerhalb des internen Netzwerks (14) zu kommunizieren,
wobei das externe Netzwerkkommunikationselement (22) und das interne Netzwerkkommunikationselement (24) über einen IP-Kommunikationskanal miteinander kommunikativ verbunden sind,
wobei das externe Netzwerkkommunikationselement (22) ferner dazu ausgebildet ist, von dem ersten Netzwerkelement (18) empfangene codierte Daten zu verarbeiten, wenn der in den codierten Daten genannte Port von dem externen Netzwerkkommunikationselement (22) nicht bedient wird,
wobei das Netzwerksystem (10) ferner dazu ausgebildet ist, ein Verfahren nach einem der vorangegangenen Ansprüche auszuführen.
